# EUROPÄISCHE PATENTANMELDUNG

(11) **EP 1 426 769 A2**
(43) Veröffentlichungstag der Anmeldung: **09.06.2004**
(21) Anmeldenummer: 03026413.9
(22) Anmeldetag: 19.11.2003
(51) Int. Cl.: G01P 13/02

(54) **Windanzeigevorrichtung**

(30) Priorität: 03.12.2002 DE 10256628
(71) Anmelder: aqua signal Aktiengesellschaft Spezialleuchtenfabrik, 28307 Bremen (DE)
(72) Erfinder: Rohlfing, Ralph, 28844 Weyhe (DE)
(74) Vertreter: Heiland, Karsten, Dipl.-Ing.

(57) **Zusammenfassung**

Die Erfindung betrifft eine Windanzeigevorrichtung mit einem an einem Mast gehaltenen Windsack, der um den Mast drehbar ist. Am Mast ist außerdem eine ortsfeste Leuchte angeordnet, die so ausgerichtet ist, dass Lichtstrahlen in den Windsack fallen und diesen zumindest teilweise von innen beleuchten. Die Leuchte ist explosionsgeschützt mit druckfester Kapselung. Ein Anwendungsgebiet sind Hub-schrauberlandeplätze auf Bohrplattformen.

## Beschreibung

Die Erfindung betrifft eine Windanzeigevorrichtung. Auf Flughäfen und an windgefährdeten Verkehrswegen sind üblicherweise Windanzeigevorrichtungen vorgesehen, bei denen ein Windsack um eine vertikale Achse drehbar gehalten ist. Der Windsack erfüllt zwei Funktionen. Zum einen lässt sich aus der Ausrichtung des Windsacks die Windrichtung ablesen. Zum anderen kann der Stand des Windsacks einen groben Hinweis auf die Windstärke geben. Für die Erkennbarkeit des Windsacks sind Tageslicht oder eine andere Art der Beleuchtung erforderlich.

Besonders wichtig ist die beschriebene Windanzeigevorrichtung für Hubschrauberlandeplätze auf Bohrplattformen. Diese befinden sich regelmäßig in windreichen Gegenden. Für die sichere Landung eines Hubschraubers auf der Bohrplattform ist eine sichtbare Windanzeigevorrichtung von großer Bedeutung. Künstliche Beleuchtung ist in dieser Umgebung besonderen Anforderungen ausgesetzt. Wegen der Möglichkeit des Austretens explosiver Gase müssen Leuchten besonderen Bestimmungen genügen und sind meist als explosionsgeschützte Leuchten mit druckfester Kapselung (Typ Ex d) ausgeführt.

Aufgabe der vorliegenden Erfindung ist es eine Windanzeigevorrichtung zu schaffen, die auch bei fehlendem Tageslicht gut sichtbar ist. Insbesondere soll die Windanzeigevorrichtung für die Verwendung auf Bohrplattformen und/oder zugehörige Hubschrauberlandeplätze geeignet sein. Die erfindungsgemäße Windanzeige-vorrichtung weist folgende Merkmale auf:
a) an einem Mast ist ein Windsack gehalten,
b) der Windsack ist um den Mast drehbar,
c) am Mast ist eine ortsfeste Leuchte angeordnet,
d) die Leuchte ist so ausgerichtet, dass Lichtstrahlen in den Windsack fallen und diesen zumindest teilweise von innen beleuchten.

Die Leuchte ist außerhalb des Windsacks angeordnet. Vorzugsweise strahlt das Licht direkt in den Windsack hinein. Das für Windsäcke verwendete Material ist üblicherweise nicht blickdicht, sodass der von innen beleuchtete Windsack bei Nacht aus der Luft gut sichtbar ist und beispielsweise einem Hubschrauberpiloten zuverlässig die Windrichtung anzeigt. Der Effekt kann noch gesteigert werden durch besondere Auswahl des für den Windsack verwendeten durchscheinenden Materials. So kann ein Material mit fluoreszierenden Eigenschaften ausgewählt werden.

Der Begriff "eine Leuchte" umfasst auch Ausführungen mit mehreren Leuchtmitteln. Diese können aus Sicherheitsgründen erforderlich sein.

Vorteilhafterweise ist die Leuchte als "Ex d"-Leuchte ausgeführt. Es handelt sich dann um eine explosionsgeschützte Leuchte mit druckfester Kapselung im Sinne der deutschen, europäischen oder internationalen Vorschriften. In diesem Zusammenhang von besonderem Vorteil ist die ortsfeste Anordnung der Leuchte. Die Leuchte bewegt sich demnach nicht entsprechend dem Windsack. Deshalb ist die Versorgung der Leuchte mit elektrischer Energie ohne Schwierigkeiten möglich. Drehbare Anschlüsse, etwa in explosionsgefährdeter Umgebung nicht zulässige Schleifringe oder dergleichen sind nicht erforderlich.

Vorzugsweise weist die Leuchte mindestens ein längliches, parallel zum Mast ausgerichtetes Leuchtmittel auf. Ebenso können mehrere parallel zueinander oder in einer parallel zum Mast verlaufenden Reihe angeordnete Leuchtmittel vorgesehen sein. Die Länge der Leuchtmittel bzw. der Reihe von Leuchtmitteln entspricht vorzugsweise maximal dem Durchmesser des Windsacks. Vorteilhaft ist eine Anordnung genau in einer Mastlängsachse.

Nach einem weiteren Gedanken der Erfindung ist der Windsack an einem Halter angeordnet, welcher am Mast drehbar gelagert ist. Üblicherweise ist der Windsack im Bereich einer Lufteintrittsöffnung durch einen Ring aufgespannt. Der Ring wird vom Halter getragen. Letzterer weist hierzu ein Halter-Oberteil und Halter-Unterteil auf. Der Ring ist im Bereich eines oberen Ringabschnitts vom Halter-Oberteil und im Bereich eines unteren Ringabschnitts vom Halter-Unterteil gehalten. Der Abstand zwischen dem Ring und der Leuchte soll möglichst gering sein und insbesondere weniger als 10 cm betragen.

In Fortbildung der Erfindung weist die Windanzeigevorrichtung einen Reflektor oder eine Blende auf, der oder die drehbar am Mast und auf einer dem Windsack gegenüberliegenden Seite des Mastes angeordnet sind. Vorteilhafterweise sind der Reflektor oder die Blende am Halter angeordnet und so zusammen mit dem Windsack drehbar. Die Blende vermeidet eine Lichtabstrahlung in Richtungen außerhalb des Lichtsacks. Eine Innenfläche - dem Mast bzw. dem Windsack zugewandte Fläche - der Blende kann reflektierend ausgebildet sind. Vorzugsweise ist die Innenfläche derart gestaltet, insbesondere gekrümmt, dass möglichst viel Licht in den Windsack hinein reflektiert wird. Eine Außenfläche der Blende ist zur Verringerung des Windwiderstands vorzugsweise konvex gekrümmt ausgebildet (konvexer Querschnitt radial zum Mast).

Vorteilhafterweise weist die Blende oder der Reflektor Durchbrüche auf. Der Windwiderstand kann dadurch gemindert werden. Auch kann auf diese Weise gezielt etwas Licht in eine dem Windsack gegenüberliegende Richtung austreten. Bevorzugt ist eine Gestaltung des Reflektors oder der Blende als gekrümmtes Lochblech. Die einzelnen Bohrungen sind je nach Aufgabenstellung größer oder kleiner, ebenso die Abstände zwischen den Bohrungen. Insbesondere sind Bohrungen mit einem Durchmesser von etwa 4 mm vorgesehen sowie Abstände zwischen den Bohrungen von etwa je 2 mm.

Nach einem weiteren Gedanken der Erfindung ist die Leuchte relativ zum Mast im Wesentlichen zentrisch angeordnet. Dabei weist der Mast im Bereich der Leuchte Tragelemente auf, die um die Leuchte herum angeordnet sind. Üblicherweise ist ein Mast ein hohler oder massiver Rundstab. Aus Festigkeits- und Gewichtsgründen wird ein hohler Rundstab (eine Röhre) bevorzugt. Diese Röhrenform ist im Bereich der Leuchte ersetzt durch die genannten Tragelemente, die die Leuchte zwischen sich aufnehmen. Als Tragelemente sind insbesondere drei oder vier senkrechte Stäbe vorgesehen, die dünn sind relativ zu einer durch die Stäbe aufgespannten Umfangsfläche, sodass möglichst wenig Licht von den Tragelementen abgeschattet wird. Möglichst viel Licht soll ohne Behinderung durch die Tragelemente in den Windsack gelangen. Möglich ist auch die Verwendung von nur einem Stab oder nur zwei Stäben, sofern diese ausreichende Festigkeit aufweisen.

Vorzugsweise ist auf einer Position oberhalb des Windsacks eine Signalleuchte angeordnet, etwa auf einer Mastspitze oberhalb und mit geringem Abstand zum Halter-Oberteil. Je nach Anwendung kann auch die Signalleuchte vom Typ "Ex d" sein.

Weitere Merkmale der Erfindung ergeben sich aus den Ansprüchen und aus der Beschreibung im Übrigen. Vorteilhafte Ausführungsformen der Erfindung werden nachfolgend anhand von Zeichnungen näher erläutert. Es zeigen:
- Fig. 1: eine perspektivische Darstellung einer erfindungsgemäßen Windanzeigevorrichtung,
- Fig. 2: eine Seitenansicht der Windanzeigevorrichtung,
- Fig. 3: das Detail III aus Fig. 2 in teilweiser geschnittener Darstellung,
- Fig. 4: das Detail IV aus Fig. 2 in teilweise geschnittener Darstellung,
- Fig. 5: eine Draufsicht auf die Windanzeigevorrichtung.

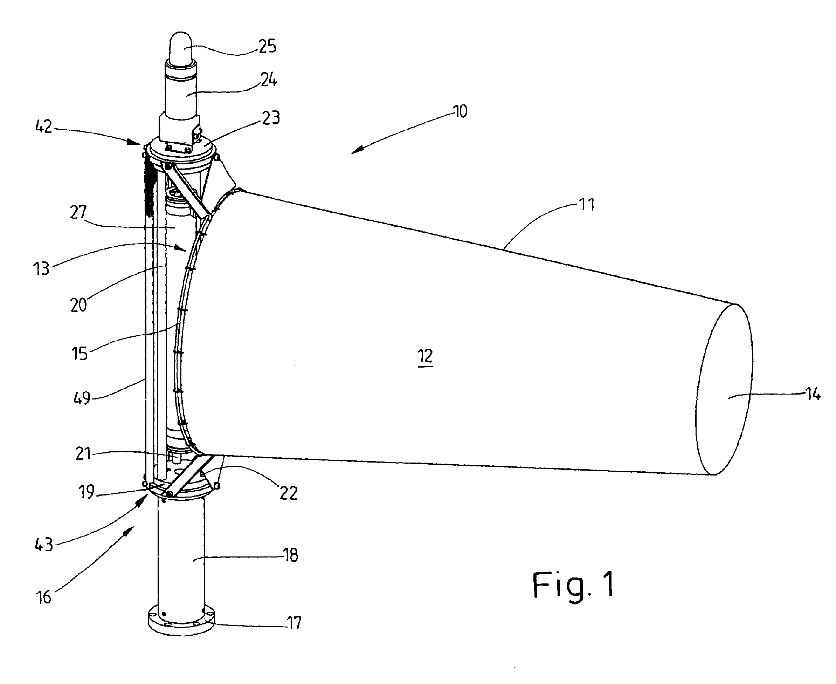

Der generelle Aufbau einer erfindungsgemäßen Windanzeigevorrichtung 10 ist in Fig. 1 gezeigt. Vorgesehen ist ein Windsack 11 mit einer im aufgeblähten Zustand röhrenförmigen Hülle 12, deren Querschnitt zwischen einer Lufteintrittsöffnung 13 und einer Luftaustrittsöffnung 14 leicht konisch konvergiert. Im Bereich der Lufteintrittsöffnung 13 ist die Hülle 12 mit einem stabilen Ring 15 verbunden und durch diesen aufgespannt.

Der Windsack 11 ist an einem Mast 16 drehbar gehalten. Die Drehung ist möglich um eine Längsachse des Mastes 16.

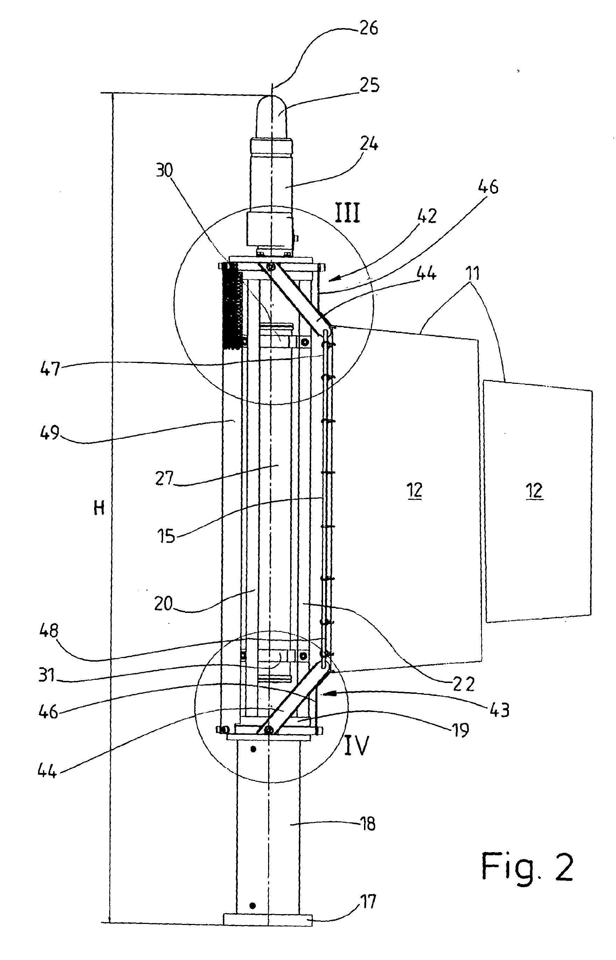

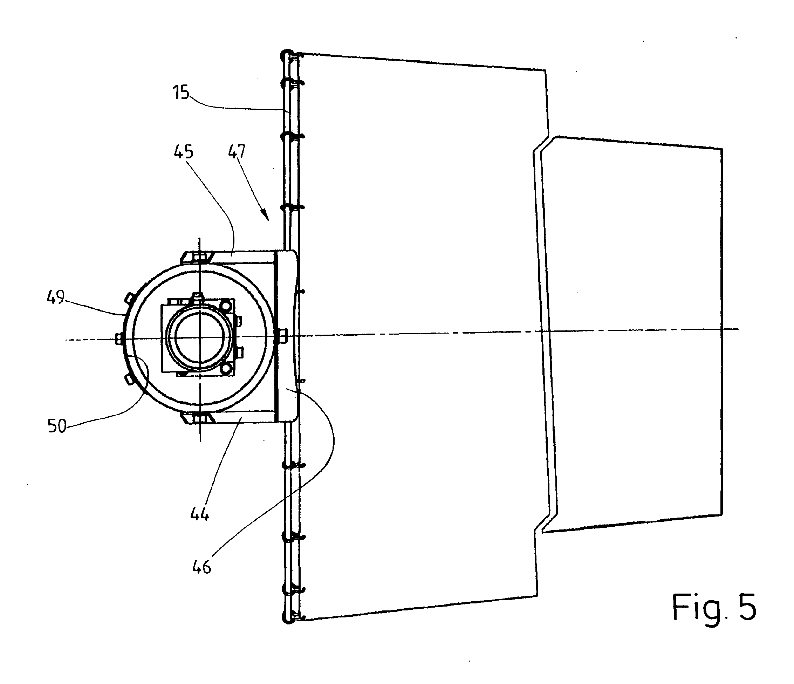

Der Mast 16 weist in Längsrichtung aufeinanderfolgend - von unten nach oben - mehrere Teile auf, nämlich einen Mastfuß 17, ein Mastrohr 18, ein unteres Windsacklager 19, Stäbe 20, 21, 22, ein oberes Windsacklager 23, einen Mastfortsatz 24 und eine darauf montierte Signalleuchte 25. Weitere Details werden nachfolgend im Zusammenhang mit den Fig. 2 bis 5 erläutert.

Das untere Windsacklager 19 ist nach unten fest mit dem Mastrohr 18 verbunden. Ebenso ist der Mastfortsatz 24 fest auf dem oberen Windsacklager 23 vorgesehen. Zwischen den beiden Windsacklagern 19, 23 sind als Tragelemente die drei Stäbe 20, 21, 22 ortsfest gehalten. Dabei sind die Stäbe um eine Mastachse 26 mit gleichen Abständen zu dieser und zueinander gruppiert. In einem derart gebildeten Zwischenraum zwischen den Stäben 20-22 ist eine Leuchte 27 gehalten. Die Leuchte 27 ist länglich ausgebildet und erstreckt sich entlang (zentrisch) der Mastachse 26. Innerhalb der Leuchte 27 können mehrere Leuchtmittel nebeneinander und/oder hintereinander angeordnet sein.

Gehalten wird die Leuchte 27 nahe ihrem oberen Ende 28 und ihrem unteren Ende 29 zwischen horizontalen Halteblechen 30, 31, die jeweils mit den Stäben 20-22 lösbar oder unlösbar verbunden sind, etwa durch Schraub- oder Nietverbindungen. Besonders günstig ist eine genau mittige Anordnung der Leuchte 27 zwischen den mit gleichen Abständen zueinander angeordneten Stäben 20-22. Einzelne Zwischenräume zwischen den Stäben 20-22 sind im Verhältnis zu den Durchmessern der Stäbe so groß, dass der Lichtverlust bzw. die Abschattung durch die Stäbe 20-22 nur gering ist.

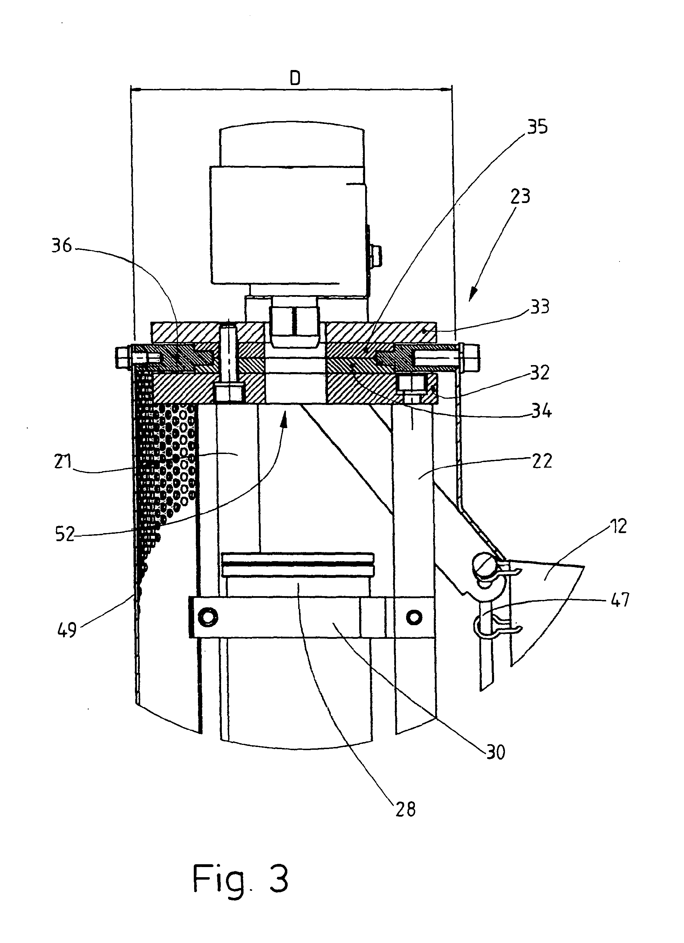

Jedes Windsacklager 19, 23 weist mehrere übereinanderliegende Teile auf, die unter Berücksichtigung ihrer Lage relativ zur Leuchte 27 definiert werden. Von der Leuchte 27 weiter entfernt liegende Teile sind mit dem Zusatz "außen" oder "äußere" versehen. Demgegenüber dichter an der Leuchte 27 angeordnete Teile tragen den Zusatz "innen" oder "innere".
Das obere Windsacklager 23 - siehe Fig. 3 - weist eine innere Lagerscheibe 32 und eine äußere Lagerscheibe 33 auf. Zwischen den beiden Lagerscheiben sind eine innere Lagerschale 34 und eine äußere Lagerschale 35 vorgesehen. Die beiden festen Lagerschalen 34, 35 halten zwischen sich einen radial äußeren drehbaren Lagerring 36.

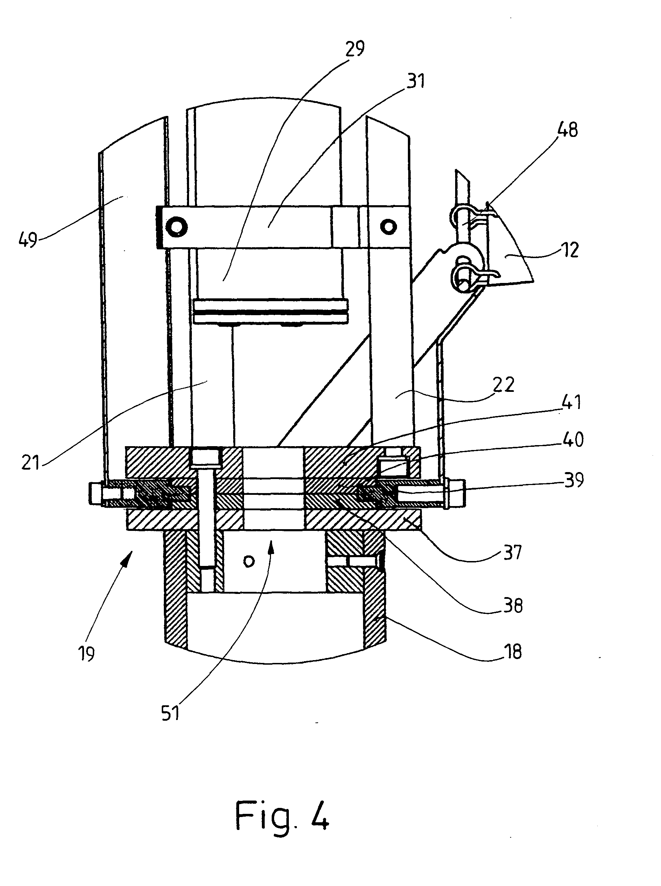

In analoger Weise ist das untere Windsacklager 19 - siehe Fig. 4 - mit äußerer Lagerscheibe 37, äußerer Lagerschale 38, Lagerring 39, innerer Lagerschale 40 und innerer Lagerscheibe 41 aufgebaut.

Der Windsack 11 ist über seinen Ring 15 und Halteelemente mit den beiden Windsacklagern 19, 23 verbunden. Als Halteelemente sind ein dem oberen Windsacklager 23 zugeordnetes Halteroberteil 42 und ein dem unteren Windsacklager 19 zugeordnetes Halterunterteil 43 vorgesehen. Die genannten Teile, 42, 43 sind jeweils mit den Lagerringen 36, 39 verbunden und bestehen jeweils aus mehreren Teilen, hier aus seitlichen Trägerblechen 44, 45 und einem zentralen Trägerblech 46. Dabei sind die Teile des Halteroberteils 42 mit einem oberen Ringabschnitt 47 des Rings 15 und die Teile des Halterunterteils 43 mit einem unteren Ringabschnitt 48 verbunden.

Dem Windsack 11 bzw. seinem Ring 15 über den Mast 16 gegenüberliegend ist eine Blende 49 angeordnet, in diesem Fall parallel zum Leuchtmittel 27 bzw. zu den Stäben 20-22. Die Blende 49 weist im Querschnitt eine Krümmung auf, sodass sich in einer Ebene senkrecht zur Mastachse 26 im Wesentlichen gleichbleibende Abstände von der Mastachse 26 ergeben. Die Anordnung der Blende 49 erhöht auch die Festigkeit und Stabilität des drehbaren tragenden Systems aus Lagerringen 36, 39, Halteroberteil 42, Halterunterteil 43 und Ring 15.

Die Blende 49 weist Durchbrüche auf bzw. ist nach Art eines Lochblechs geschaltet. Dadurch ist der Windwiderstand der Blende 49 verringert. Auch gelangt Licht durch die Blende 49 hindurch. Eine Innenfläche 50 der Blende 49 ist reflektierend ausgebildet. Zumindest handelt es sich um eine glänzende oder polierte Oberfläche. Letzteres ist insbesondere in Verbindung mit dem Werkstoff Edelstahl vorteilhaft.

Die Leuchte 27 und die rote Signalleuchte 25 sind explosionsgeschützt und mit druckfester Kapselung versehen (Typ "Ex d").

Insbesondere ausgehend von dem Halteroberteil 42 kann der Windsack 11 mit einem oberhalb desselben angeordneten Leitblech und/oder einem innerhalb des Windsacks angeordneten Windsackspanner versehen sein. Das Leitblech bewirkt eine schnellere und effektivere Ausrichtung des Windsacks in Abhängigkeit von der Windrichtung. Der Windsackspanner erleichtert das Aufblähen des Windsacks bei zunehmendem Wind, ausgehend von Windstille.

Das Mastrohr 18 ist hohl und weist in seinem Inneren nicht gezeigte elektrische Leitungen auf. Diese versorgen die Leuchte 27 mit elektrischer Energie. Hierzu ist das untere Windsacklager 19 mit einer axial gerichteten zentrischen Bohrung 51 versehen. Analog hierzu weist das obere Windsacklager 23 eine axial gerichtete zentrische Bohrung 52 für die Durchführung nicht gezeigter elektrischer Leitungen zur elektrischen Versorgung der Signalleuchte 25 auf.

Die Windanzeigevorrichtung weist eine Gesamthöhe H von etwa 140 cm und einen wirksamen Mastdurchmesser D im Bereich der Blende 49 von etwa 16 cm auf.

### Bezugszeichenliste:

- 10: Windanzeigevorrichtung
- 11: Windsack
- 12: Hülle
- 13: Lufteintrittsöffnung
- 14: Luftaustrittsöffnung
- 15: Ring
- 16: Mast
- 17: Mastfuß
- 18: Mastrohr
- 19: unteres Windsacklager
- 20: Stab
- 21: Stab
- 22: Stab
- 23: oberes Windsacklager
- 24: Mastfortsatz
- 25: Signalleuchte
- 26: Mastachse
- 27: Leuchte
- 28: oberes Ende
- 29: unteres Ende
- 30: Halteblech
- 31: Halteblech
- 32: innere Lagerscheibe
- 33: äußere Lagerscheiben
- 34: innere Lagerschale
- 35: äußere Lagerschale
- 36: Lagerring
- 37: äußere Lagerscheibe
- 38: äußere Lagerschale
- 39: Lagerring
- 40: innere Lagerschale
- 41: innere Lagerscheibe
- 42: Halteroberteil
- 43: Halterunterteil
- 44: seitliches Trägerblech
- 45: seitliches Trägerblech
- 46: zentrales Trägerblech
- 47: oberer Ringabschnitt
- 48: unterer Ringabschnitt
- 49: Blende
- 50: Innenfläche
- 51: Bohrung
- 52: Bohrung

## Patentansprüche

1. Windanzeigevorrichtung (10) mit folgenden Merkmalen:
a) an einem Mast (16) ist ein Windsack (11) gehalten,
b) der Windsack (11) ist um den Mast (16) drehbar,
c) am Mast ist eine ortsfeste Leuchte (27) angeordnet,
d) die Leuchte (27) ist so ausgerichtet, dass Lichtstrahlen in den Windsack (11) fallen und diesen zumindest teilweise von innen beleuchten.

2. Vorrichtung nach Anspruch 1, **dadurch gekennzeichnet, dass** die Leuchte (27) explosionsgeschützt ist mit druckfester Kapselung

3. Vorrichtung nach Anspruch 1 oder 2, **dadurch gekennzeichnet, dass** die Leuchte (27) mindestens ein längliches, parallel zum Mast (16) angeordnetes Leuchtmittel aufweist.

4. Vorrichtung nach Anspruch 1 oder einem der weiteren Ansprüche, **dadurch gekennzeichnet**, das der Windsack (11) an einem Halter angeordnet ist, welcher am Mast drehbar gelagert ist.

5. Vorrichtung nach Anspruch 4, **dadurch gekennzeichnet, dass** die Leuchte (27) zwischen einem Halteroberteil (42) und Halterunterteil (43) des Halters angeordnet ist.

6. Vorrichtung nach Anspruch 1 oder einem der weiteren Ansprüche, **gekennzeichnet durch** einen Reflektor oder eine Blende (49), der oder die drehbar am Mast und auf einer dem Windsack (11) gegenüberliegenden Seite des Mastes (16) angeordnet sind.

7. Vorrichtung nach Anspruch 6, **dadurch gekennzeichnet, dass** der Reflektor bzw. die Blende (49) Durchbrüche aufweist.

8. Vorrichtung nach Anspruch 1 oder einem der weiteren Ansprüche, **dadurch gekennzeichnet, dass** die Leuchte (27) relativ zum Mast (16) im Wesentlichen zentrisch angeordnet ist, und dass der Mast (16) im Bereich der Leuchte (27) Tragelemente aufweist, die um die Leuchte herum angeordnet sind.

9. Vorrichtung nach Anspruch 1 oder einem der weiteren Ansprüche, **dadurch gekennzeichnet, dass** auf einer Position oberhalb des Windsacks (11) eine Signalleuchte (25) angeordnet ist.
